# EUROPEAN PATENT APPLICATION

(11) **EP 1 273 934 A2**
(43) Date of publication of application: **08.01.2003**
(21) Application number: 02425240.5
(22) Date of filing: 17.04.2002
(51) Int. Cl.: G02B 5/128

(54) **A reflecting heat-adhesive strip or material.**

(30) Priority: 21.06.2001 IT MO20010126
(71) Applicant: Autoadesivi S.p.A., 41019 Soliera, (Province of Modena) (IT)
(72) Inventor: Corradi, Paolo, 42015 Correggio (Reggio Emilia) (IT)
(74) Representative: Gotra, Stefano

(57) **Abstract**

The multi-layer material or heat-adhesive strip comprises: a plurality of glass microspheres (1), a first layer of primer (2), for example a polyurethane primer, which underlies the glass microspheres (1), a layer of reflective metal material (4) which underlies the first layer of primer (2), a second layer of primer (5) for metals, for example a polyurethane primer, which underlies the layer of reflective material (4), and a third layer of primer (6), for example a high-weight polyurethane primer, which underlies the second layer of primer (5). The reflecting material also comprises a layer (7) of material or heat-adhesive strip, underlying and coupling with the third layer of primer (6). The first layer of primer (2) is added-to with one or more silane derivatives, for example aminopropyltriethoxysilane, to improve coupling between inorganic surfaces (for example glass borosilicates) and organic polymers (for example polyurethane resins).

## Description

The invention relates to a reflecting multi-layer strip, which can be coupled to a material or to a heat-adhesive strip.

Specifically, though not exclusively, the invention can be used in the field of clothing, including high-visibility clothing but also including fashion clothing, functional clothing , where a reflecting strip is required. The strip should also be resistant to abrasion, temperature, atmospheric wear and tear and washing, both dry- and wet-washing; the strip should also be long-lasting and simple and economical to produce.

At present materials or heat-adhesive strips are used for the above-purpose, which include multi-layer films bearing glass microspheres.

These materials usually include a plurality of layers, among which at least one layer of material or heat-adhesive material, and at least one layer made of a metallic reflective material.

The glass microspheres give materials of the above kind a suitable degree of refractive power with regard to the incident light beam on the metal layer.

The coupling between the various layers constituting the material or strip is guaranteed by the presence of one or more layers of glue.

Materials or heat-adhesive strips display various drawbacks.

Anchoring the glass microspheres to the underlying refractive material is often problematic, as over time it wears, and is in particular poorly resistant to abrasion and fatigue, to atmospheric agents and/or both wet- and dry-cleaning, as well as to detergents.

The main aim of the present invention is to resolve the problems existing in the prior art, by providing a multi-layer material or refractive heat-adhesive strip with glass microspheres, which is effective as regards refractive power and reflection, and which at the same time guarantees good anchoring of the microspheres to the material.

A further aim and advantage of the present invention is that it provides a multi-layer material or heat-adhesive strip which lasts over a period of time, which is resistant to wear, temperature and dry-cleaning and wet-washing cycles, in accordance with Italian and European standards.

These aims and advantages and more besides are all attained by the present invention, a refractive and reflecting multi-layer material or heat-adhesive strip, comprising a plurality of glass microspheres, a first layer of primer, for example a polyurethane primer, which underlies the microspheres, a layer of reflective metallic material, underlying the first layer of primer, a second layer of primer for metals, for example a polyurethane primer, underlying the metal layer, a third layer of primer, for example a high-weight polyurethane primer, underlying the second layer of primer, the third layer of primer being soft, resistant to water and detergents.

The reflective material or heat-adhesive strip is characterised in that the first layer of polyurethane primer is added to with one or more silane derivatives, for example aminopropyltriethoxysilane, the addition of which favours and makes possible adhesion between inorganic surfaces (for example glass borosilicates) and organic polymers (for example polyurethane resins).

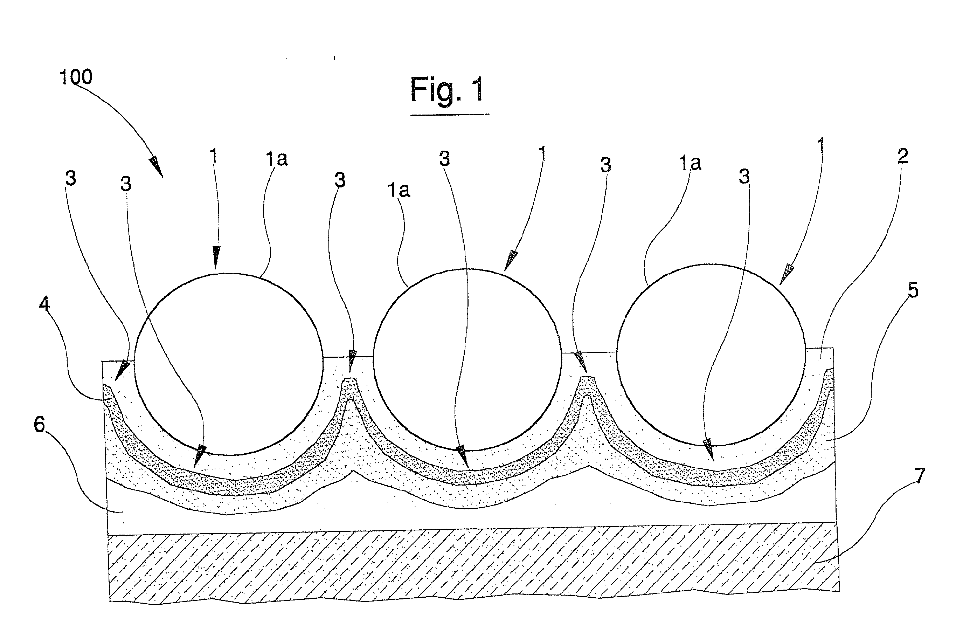

Further characteristics and advantages of the present invention will better emerge from the detailed description that follows, of a preferred but non-exclusive embodiment of the invention, illustrated purely by way of example in figure 1, in which:
figure 1 is a vertical section of the reflective multi-layer material or heat-adhesive strip of the invention.

With reference to figure 1, 100 indicates in its entirety a reflective multi-layer material or heat-adhesive strip.

The material 100 comprises a plurality of glass micro-spheres 1, each of which has a diameter preferably between 45µm and 105 µm, as well as an index of refraction of about 1.92-1.93.

Glass microspheres having these refractive characteristics are in accordance with European standard EN 471 relating to the sector.

A refractive material of this type comprises at least one layer of reflecting material, usually metallic, and various layers of primer, which have a gluing function.

In particular, the material 100 of the present invention comprises at least one first layer of primer 2 coated onto a reflecting metallic layer 4, for example aluminium, and at least two layers of primer spread below the reflecting metallic layer 4.

The first layer of primer 2 is interposed between the glass microspheres 1 and the meal layer 4, and has the function of anchoring the microspheres 1 to the reflecting material.

The first layer of primer 2, for example a polyurethane primer, is advantageously added-to with a silane derivative, for example aminoalkylsilane, to improve coupling between the glass microspheres 1 and the reflecting material.

Additives of this type comprise, for example, aminopropyltriethoxysilane NH₂(CH₂)₃Si(OC₂H₅)₃and aminopropyltrimethoxysilaneNH₂(CH₂)₃Si(OCH₃).

These substances are known to favour adhesion between inorganic surfaces (for example glass borosilicates, which is generally the material constituting the glass microspheres) and organic polymers (for example a polyurethane resin), inasmuch as they possess favourable characteristics of chemical affinity with the inorganic surfaces and the organic polymers, creating electrostatic interactions, e.g. hydrogen bonds, between them.

The Applicant has advantageously found that the best results are obtained with use of the commercial product Dynasylan® AMEO or Dynasylan® AMEO-P. As an alternative a same type of additive, for example an aminoalkylsilane, can be used for treating, as described above, the external surface 1a of the glass microspheres 1, once more with the aim of improving the couple between the microspheres 1 and the first layer of primer 2.

The first layer of primer 2 advantageously comprises at least one face 3, facing in the same direction as the reflective metal layer 4, which has been surface-treated to improve anchoring between the first layer of primer 2 and the reflective metal layer 4.

The reflective multi-layer material or heat-adhesive strip of the invention also comprises, as mentioned above, two layers of primer which lie below the metal layer 4; a second layer of primer 5, for metals, for example a polyurethane layer and a third layer of primer 6, for example a polyurethane layer, below the second layer of primer 5.

The third layer of primer 6 has protective functions and is soft, resistant to water, detergents, atmospheric agents and temperatures, and therefore is preferably high-weight, for example between 40 and 70 grams per square metre.

The third layer of primer 6 is coupled to an underlying layer 7 of material or heat-adhesive strip.

The invention thus attains all the set aims.

## Claims

1. A reflecting multi-layer material or heat-adhesive strip, **characterised in that** it comprises:
a plurality of glass microspheres (1);
a first layer of primer (2), for example a polyurethane primer, which underlies the glass microspheres (1);
a layer of reflective metal material (4) which underlies the first layer of primer (2);
a second layer of primer (5) for metals, for example a polyurethane primer, which underlies the layer of reflective material (4);
a third layer of primer (6), for example a high-weight polyurethane primer, which underlies the second layer of primer (5);
a layer (7) of material or heat-adhesive strip, underlying and coupling with the third layer of primer (6),
the first layer of primer (2) being added-to with a silane derivative, for example aminoalkylsilane, to improve coupling between the glass microspheres (1) and
the reflective metal material (2).

2. A reflecting multi-layer material or heat-adhesive strip, **characterised in that** it comprises:
a plurality of glass microspheres (1);
a first layer of primer (2), for example a polyurethane primer, which underlies the glass microspheres (1);
a layer of reflective metal material (4) which underlies the first layer of primer (2);
a second layer of primer (5) for metals, for example a polyurethane primer, which underlies the layer of reflective material (4);
a third layer of primer (6), for example a high-weight polyurethane primer, which underlies the second layer of primer (5);
a layer (7) of material or heat-adhesive strip, underlying and coupling with the third layer of primer (6),
the glass microspheres (1) comprising an external surface (1a) treated with an additive for improving coupling between the glass microspheres (1) and the first layer of primer (2), the additive being a silane derivative, for example an aminoalkylsilane.

3. The reflecting multi-layer material or heat-adhesive strip according to any one of the preceding claims, **characterised in that** the glass microspheres (1) exhibit a diameter comprised between 45 micron and 105 micron.

4. The reflecting multi-layer material or heat-adhesive strip according to any one of the preceding claims, **characterised in that** the glass microspheres (1) exhibit an index of refraction of 1.92-1.93.

5. The reflecting multi-layer material or heat-adhesive strip according to any one of the preceding claims, **characterised in that** the first layer of primer (2) comprises a face (3) which is facing in a same way as the reflective metal layer (4), the face (3) having been surface-treated in order to improve anchoring between the first layer of primer (2) and the reflective metal layer (4).

6. The reflecting multi-layer material or heat-adhesive strip according to any one of the preceding claims, **characterised in that** the reflective metal layer (4) is made of aluminium.
